(19) Europäisches Patentamt
European Patent Office
Office européen des brevets

(11) **EP 2 379 390 B1**

(12) **EUROPÄISCHE PATENTSCHRIFT**

(45) Veröffentlichungstag und Bekanntmachung des Hinweises auf die Patenterteilung:
**17.07.2013 Patentblatt 2013/29**

(21) Anmeldenummer: **09744708.0**

(22) Anmeldetag: **06.11.2009**

(51) Int Cl.:
*B60W 20/00* *(2006.01)*  *B60W 10/06* *(2006.01)*
*B60W 10/08* *(2006.01)*  *B60W 30/18* *(2012.01)*
*B60W 30/192* *(2012.01)*

(86) Internationale Anmeldenummer:
**PCT/EP2009/064795**

(87) Internationale Veröffentlichungsnummer:
**WO 2010/072461 (01.07.2010 Gazette 2010/26)**

(54) **VERFAHREN UND VORRICHTUNG ZUM BETREIBEN EINES HYBRIDFAHRZEUGES**

METHOD AND DEVICE FOR OPERATING A HYBRID VEHICLE

PROCÉDÉ ET DISPOSITIF POUR LE FONCTIONNEMENT D'UN VÉHICULE HYBRIDE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **16.12.2008 DE 102008054704**

(43) Veröffentlichungstag der Anmeldung:
**26.10.2011 Patentblatt 2011/43**

(73) Patentinhaber: **Robert Bosch GmbH**
**70442 Stuttgart (DE)**

(72) Erfinder: **FALKENSTEIN, Jens-Werner**
**73434 Aalen (DE)**

(56) Entgegenhaltungen:
**EP-A2- 0 922 600          EP-A2- 1 439 296**
**DE-A1-102006 047 655   US-A1- 2008 274 856**

**Beschreibung**

Die Erfindung betrifft ein Verfahren zum Betreiben eines Hybridfahrzeuges, bei welchem während des Fahrzustandes des Hybridfahrzeuges ein erstes, sich im Ruhezustand befindendes Antriebsaggregat gestartet wird, indem ein Drehmoment von einem zweiten, sich in Betrieb befindlichen Antriebsaggregates auf das erste Antriebsaggregat übertragen wird.

Stand der Technik

Fahrzeuge mit einer hybriden Antriebsstruktur weisen meistens einen Verbrennungsmotor als erstes Antriebsaggregat und als zweites Antriebsaggregat einen Elektromotor oder einen Hydraulikmotor auf. Auch weitere zusätzliche Antriebsaggregate sind möglich. So kann das Drehmoment während des Anfahrbetriebes des Hybridfahrzeuges von den Antriebsaggregaten aufgebracht werden. Es ist auch ein rein elektrisches oder hydraulisches Fahren möglich. Ein Start des Verbrennungsmotors kann während des elektrischen oder hydraulischen Fahrens erforderlich sein, z.B. wenn der Fahrer mehr Leistung anfordert als der Elektro- oder der Hydraulikmotor liefern kann oder wenn der Energieinhalt eines Energiespeichers zu stark abfällt.

Eine Trennkupplung, welche im schlupfenden Zustand den Verbrennungsmotor zum Start ankoppelt, weist Ungenauigkeiten auf. Darüber hinaus ist der erforderliche zeitliche Verlauf des Start-Drehmomentes bzw. der Start-Leistung aufgrund variierender Reib- und Kompressionsverhältnisse des Verbrennungsmotors nicht exakt bestimmbar. Beides verhindert eine exakte Kompensation des Start-Drehmomentes bzw. der Start-Leistung durch den Elektromotor oder den Hydraulikmotor. Der nicht kompensierte Anteil wirkt als Störung auf den Antriebsstrang, die Drehschwingungen anregt und den Fahrkomfort verschlechtert.

Aus der DE 10 2006 047 655 A1 ist ein Verfahren zum Betreiben eines Parallel-Hybridantriebs bekannt, welcher eine elektrische Maschine und einen Verbrennungsmotor aufweist. Mittels der elektrischen Maschine wird im Fahrzustand des Fahrzeuges ein Start des Verbrennungsmotors durch Schließen der Trennkupplung durchgeführt. Während einer Regelung, bei welcher eine Betriebsgröße des Parallel-Hybridantriebes erfasst wird und mit einer entsprechenden Modell-Betriebsgröße eines Modells des Parallel-Hybridantriebes verglichen wird, wird eine aus dem Vergleich resultierende Abweichung der elektrischen Maschine zumindest teilweise ausgeglichen.

Aus der EP 0 922600 A2 ist ein Verfahren nach dem Oberbegriff des Anspruchs 1 bekannt.

Offenbarung der Erfindung

Das erfindungsgemäße Verfahren zum Betreiben eines Hybridfahrzeuges mit den Merkmalen des Anspruchs 1 oder 2 weist den Vorteil auf, dass während des Starts und/ oder Stopps des ersten Antriebsaggregates auf der Basis eines gemessenen, beobachteten oder modellierten Verlaufes der Fahrzeuglängsbewegung des Hybridfahrzeuges in das Drehmoment oder die Leistung des zweiten Antriebsaggregates eingegriffen wird, um den beim Start und/ oder Stopp des ersten Antriebsaggregates entstehenden Störungen entgegenzuwirken. Beim Start des ersten Antriebsaggregates erfolgt ein Anschleppen des ersten Antriebsaggregates, ein dadurch hervorgerufener zeitweiliger Einbruch der Winkelgeschwindigkeit des zweiten Antriebsaggregates wird vermieden. Ebenso wird eine zeitweise Erhöhung der Winkelgeschwindigkeit des zweiten Antriebsaggregates kompensiert, die beim Hochlaufen des ersten Antriebsaggregates in Folge von Überschwingungen der Winkelgeschwindigkeit des ersten Antriebsaggregates auftreten kann.

In einer Ausgestaltung ist die aus der Fahrzeuglängsbewegung abgeleitete Größe hochpassgefiltert und beeinflusst das Drehmoment des zweiten Antriebsaggregates. Durch die Hochpassfilterung werden Gleichanteile aus der Größe entfernt. Es sind nur noch eventuell auftretende Triebstrangschwingungen enthalten. Die Aufschaltung der abgeleiteten Größe auf das zweite Antriebsaggregat wirkt den Triebstrangschwingungen entgegen. Auf einen Vergleich eines Sollwertes mit einem Istwert kann verzichtet werden.

Erfindungsgemäß stellt mindestens eine der aus der Fahrzeuglängsbewegung des Hybridfahrzeuges abgeleiteten Größen einen Sollwert dar, welcher mit einem Istwert verglichen wird, der von dem zweiten Antriebsaggregat und /oder aus der Bewegung des Hybridfahrzeuges bereitgestellt wird, wobei in Abhängigkeit von dem Vergleich das Drehmoment oder die Leistung des zweiten Antriebsaggregates geregelt wird. Damit wird eine Regelschleife über den gesamten Antriebsstrang geschlossen. Aggregate oder Übertragungselemente des Antriebsstranges mit nur ungenau bekannten Eigenschaften wie z.B. ein Drehmomentwandler oder eine Wandlerüberbrückungskupplung liegen innerhalb der Regelschleife. Ihre den Antriebsstrang beeinflussenden Werte werden von der Rückführung der Regelung erfasst. Da durch die Regelungen Ungenauigkeiten ausgeglichen werden, wird ein hoher Fahrkomfort ermöglicht und Drehschwingungen werden optimal ausgeregelt.

Erfindungsgemäß wird die aus der Fahrzeuglängsbewegung des Hybridfahrzeuges abgeleitete Größe durch Messung der Raddrehzahlen, der Raddrehbeschleunigungen, der Fahrzeuglängsgeschwindigkeit und/oder der Fahrzeuglängsbeschleunigung bestimmt. Durch diese Messungen und Berechnungen, welche als solche im Hybridfahrzeug für andere Anwendungen bestimmt werden, ist eine kostengünstige Bestimmung des gewünschten Parameters möglich, auf den zusätzlichen Einsatz von Sensoren oder die Erhöhung der Rechenkapazität von Mikrorechnern in Fahrzeug kann verzichtet werden.

In einer Weiterbildung stellt die aus der Fahrzeuglängsbewegung des Hybridfahrzeuges abgeleitete Größe eine Geschwindigkeit der Fahrzeugmasse, eine Differenzgeschwindigkeit einer Fahrzeugmasse und einer Masse des zweiten Antriebsaggregates und/oder eine Beschleunigung der Fahrzeugmasse dar. Durch diese Definition der Größe wird die Schwingung, welche das zweite Antriebsaggregat gegen die Fahrzeugmasse ausführt, bei der Beeinflussung des Drehmomentes des zweiten Antriebsaggregates zuverlässig mit berücksichtigt. Vorteilhafterweise wird die Beschleunigung der Fahrzeugmasse gefiltert.

In einer weiteren Ausgestaltung wird die aus der Fahrzeuglängsbewegung abgeleitete Größe zu einem Zeitpunkt ermittelt, in welchem der Schließvorgang der Trennkupplung beginnt oder noch nicht begonnen hat. Da sich die Trennkupplung nur allmählich schließt, hat dies den Vorteil, dass die Bestimmung der Größe vor dem Start des ersten Antriebsaggregates erfolgt und somit die dadurch bedingten, durch Anschleppen oder erste Zündungen verursachten Einbrüche oder Überschwingungen noch keinen Einfluss auf den Antriebsstrang haben. Dadurch wird die Referenzgröße zu einem Zeitpunkt bestimmt, zu welchem das Hybridfahrzeug allein von dem zweiten Antriebsaggregat angetrieben wird.

In einer Weiterbildung erfolgt der Vergleich des Sollwertes, der aus der Fahrzeuglängsbewegung des Hybridfahrzeuges abgeleitet wurde, mit dem aus der Fahrzeugbewegung abgeleiteten Istwert für einen vorgegebenen Zeitraum. Auch die Regelung des Drehmomentes des zweiten Antriebsaggregates wird nur dann eingesetzt, wenn das erste Antriebsaggregats gestartet wird. Die Regelung erfolgt nur so lange bis das erste Antriebsaggregat eingeschwungen ist und seinen normalen Beitrag zum Antrieb des Hybridfahrzeuges leistet.

In einer Ausführung bleibt der aus der Fahrzeuglängsbewegung des Hybridfahrzeuges abgeleitete Sollwert für den vorgegebenen Zeitraum unverändert. Dadurch wird eine zuverlässige Regelung auf den Betrieb des Antriebsstranges vor dem Start des ersten Antriebsaggregates ermöglicht. Es ist aber auch möglich, dass der Sollwert den sich ändernden Randbedingungen angepasst wird. Dies ist zum Beispiel möglich, wenn der Fahrer während des Startes des ersten Antriebsaggregates den Fahrerwunsch verändert.

Der vorgegebene Zeitraum umfasst dabei mindestens die Spanne ab dem Beginn des Schließvorganges bis zum vollständigen Schließen der Trennkupplung.

Vorteilhafterweise wird der Sollwert anhand eines Modells ermittelt. Während des Startvorganges des ersten Antriebsaggregates wird eine modellierte Fahrzeuglängsbewegung berechnet, die sich ergeben würde, wenn kein Startvorgang des ersten Antriebsaggregates aktiv wäre. Das Modell berücksichtigt ein sich änderndes Fahrerwunschmoment, abgeschätzte Fahrwiderstandskräfte wie Luft-, Roll- und Steigungswiderstand, Massenträgheiten, das dynamische Verhalten des Antriebsstranges und/ oder Aggregateeigenschaften wie Momentengrenzen. Anhand der modellierten Fahrzeuglängsbewegung werden eine modellierte Winkelgeschwindigkeit und eine modellierte gefilterte Winkelbeschleunigung einer Fahrzeugersatzdrehmasse berechnet, die als Sollwerte für einen Vergleich mit den Istwerten der Regelung zu grunde gelegt werden.

Ebenso kann anhand der modellierten Fahrzeuglängsbewegung eine modellierte Winkelgeschwindigkeit für eine Drehmasse des zweiten Antriebsaggregates ermittelt werden, für den Fall, dass kein Startvorgang des ersten Antriebsaggregates aktiv ist. Die modellierte Winkelgeschwindigkeit kann z. B. mit Hilfe eines Drehmomentwandlermodells ermittelt werden und als Sollwert für eine Regelung dienen.
Die Istwerte können Ruckel- bzw. Triebstrangschwingungen aufweisen.

Günstig ist, wenn die modellierte Fahrzeuglängsbewegung und die daraus ermittelten Sollwerte keine schwingenden Anteile enthalten. Die Regelung hat dann eine schwingungsdämpfende Wirkung.

In einer Ausgestaltung wird der Startvorgang des ersten Antriebsaggregates am zeitlichen Verlauf einer Differenz zwischen Sollwert und Istwert erkannt. Auf zusätzliche Messmittel kann somit verzichtet werden.

Die Erfindung lässt zahlreiche Ausführungsformen zu. Eine davon soll anhand der in der Zeichnung dargestellten Figuren näher erläutert werden.
Es zeigt:

Figur 1:   Prinzipdarstellung eines parallelhybridischen Antriebsstranges

Figur 2:   Signalflussplan für den Antriebsstrang gemäß Figur 1

Figur 3:   Verläufe der Drehmomente und Winkelgeschwindigkeiten nach dem Stand der Technik

Figur 4:   Verläufe der Drehmomente und Winkelgeschwindigkeiten nach dem erfindungsgemäßen Verfahren.

Figur 5:   schematisches Ablaufdiagramm eines Ausführungsbeispieles des erfindungsgemäßen Verfahrens

Gleiche Merkmale sind durch gleiche Bezugzeichen gekennzeichnet.

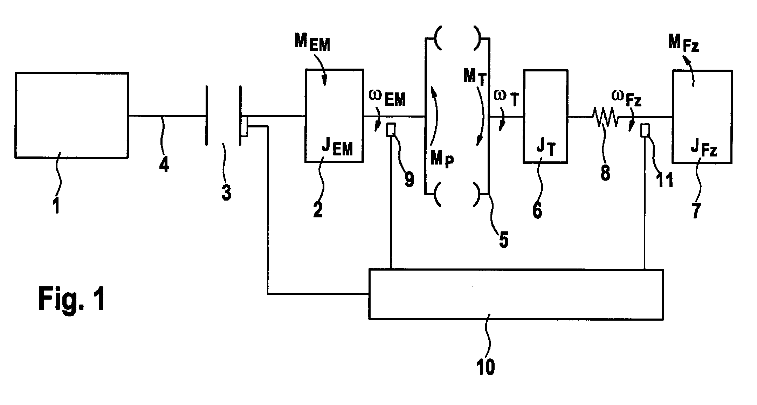

Figur 1 zeigt ein vereinfachtes Modell eines parallelhybridischen Antriebsstranges, bei welchem ein Verbrennungsmotor 1 mit einem Elektromotor 2 über eine Trennkupplung 3 miteinander verbunden sind. Der Elektromotor 2 ist dabei auf der Antriebswelle 4 des Verbrennungsmotors 1 positioniert. Der Elektromotor 2 treibt über einen Drehmomentwandler 5 und ein nicht weiter dargestelltes Automatikgetriebe, die Antriebsräder des Fahrzeuges an, welche ebenfalls nicht abgebildet sind.

Die rotatorischen Trägheitsmomente der sich mit der Winkelgeschwindigkeit $\omega_T$ drehenden Turbine des Drehmomentwandlers 5 sowie Teile des Automatikgetriebes sind auf die Getriebeeingangswelle umgerechnet und in einer rotatorischen Turbinendrehmasse 6 mit dem Trägheitsmoment $J_T$ zusammengefasst, was sich an den Drehmomentwandler 5 anschließt.

Die rotatorischen Trägheiten von Antriebswellen und Rädern sowie die translatorisch bewegte Fahrzeugmasse (welche die Fahrzeugträgheit repräsentiert) sind entsprechend den Übersetzungsverhältnissen auf die Getriebeeingangswelle umgerechnet und in einer rotatorischen Fahrzeugersatzdrehmasse 7 mit dem Trägheitsmoment $J_{Fz}$ zusammengefasst.

Die zwischen der Turbinendrehmasse 6 und der Fahrzeugersatzdrehmasse 7 angebrachten Antriebswellen (insbesondere die Seitenwellen mit einer dominierenden Steifigkeit) sind durch eine Drehfeder 8 mit der Federsteifigkeit c und der Dämpfung d nachgebildet.

Die Fahrwiderstandskräfte (Luft-, Roll- und Steigungswiderstand) sind in ein auf die Fahrzeugersatzdrehmasse 7 wirkendes Fahrwiderstandsmoment $M_{Fz}$ umgerechnet. Auf die Fahrzeugersatzdrehmasse 7 wirkt weiterhin das über die Drehfeder 8 übertragene Moment.

Der Elektromotor 2 weist eine Drehmasse mit einem Trägheitsmoment $J_{EM}$ auf, in welcher das Trägheitsmoment des Rotors des Elektromotors 2 sowie die rotatorischen Trägheitsmomente von Teilen des Drehmomentwandlers 5 und der Trennkupplung 3 zusammengefasst sind.

Die Winkelgeschwindigkeit $\omega_{EM}$ der Drehmasse des Elektromotors 2 wird von einem Drehzahlgeber 9 gemessen und an eine Fahrzeugsteuerung 10 weitergeleitet. Ein weiterer Drehzahlgeber 11 ermittelt die Winkelgeschwindigkeit $\omega_{Fz}$ der Fahrzeugersatzdrehmasse 7, welche ebenfalls an die Fahrzeugsteuerung 10 gemeldet wird.

Auf die Drehmasse des Elektromotors 2 wirken das Luftspaltdrehmoment $M_{EM}$, das für den Antrieb des Drehmomentwandlers 5 erforderliche Pumpenmoment $M_P$ sowie das von der Trennkupplung 3 übertragene Moment $M_{TK}$. Die Fahrzeugsteuerung 10 ist weiterhin mit der Trennkupplung 3 verbunden, wodurch das Moment $M_{TK}$ der Trennkupplung 3 durch Öffnen und Schließen der Trennkupplung 3 beeinflusst wird.

Beim elektrischen Fahren ist die Trennkupplung 3 geöffnet und das von der Trennkupplung 3 übertragene Moment $M_{TK} = 0$. Ein Start des Verbrennungsmotors 1 aus dem elektrischen Fahren heraus erfolgt durch ein Schließen der Trennkupplung 3 während der Fahrt. Was bedeutet, dass sich der Elektromotor 2 dreht und der Verbrennungsmotor 1 zunächst noch still steht. Mit einem Moment $M_{TK} < 0$ erfolgt ein Anschleppen des Verbrennungsmotors 1, wobei die Winkelgeschwindigkeit $\omega_{EM}$ des Elektromotors 2 einbricht. Beim Hochlaufen des Verbrennungsmotors 1 entsteht infolge der ersten Zündungen ein Überschwingen der Verbrennungsmotordrehzahl, was zu einer temporären Erhöhung der Winkelgeschwindigkeit $\dot{u}_{EM}$ des Elektromotors 2 führt. Beides wirkt sich auf den restlichen Antriebsstrang aus und beeinträchtigt durch Ruckelbewegungen des Fahrzeuges den Fahrkomfort.

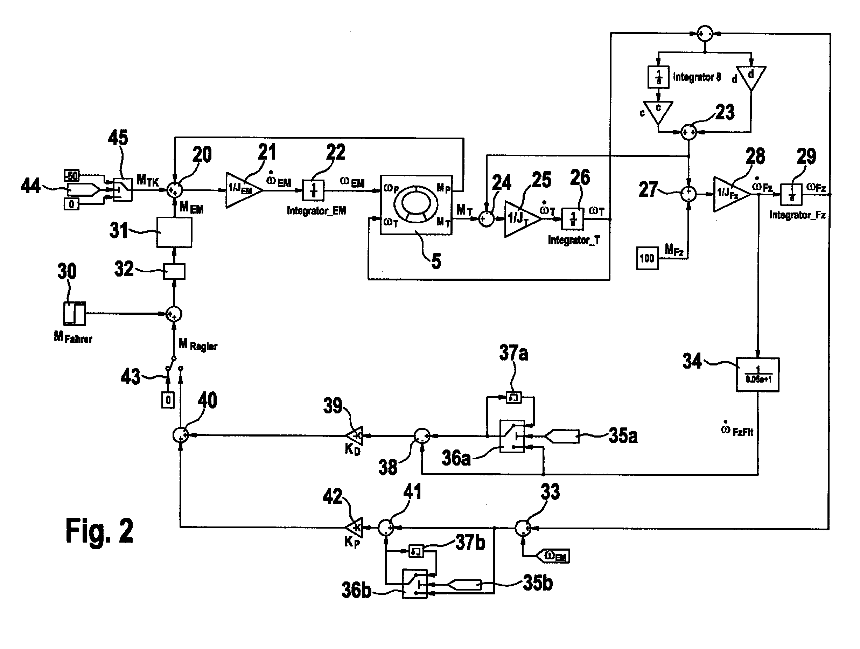

In Figur 2 ist ein Signalflußplan für den erläuterten Antriebsstrang gemäß Figur 1 dargestellt. Das Pumpenmoment $M_P$ und das Turbinenmoment $M_T$ des Drehmomentwandlers 5 hängen von den Drehzahlen bzw. den Winkelgeschwindigkeiten des nicht weiter dargestellten Pumpen- und Turbinenrades des Drehmomentwandlers 5 ab. Das Pumpenrad ist mit dem Elektromotor 2 gekoppelt und dreht mit der Winkelgeschwindigkeit $\omega_{EM}$ des Elektromotors 2. Das Turbinenrad 6 rotiert mit der Winkelgeschwindigkeit $\omega_T$.

Die auf die Drehmasse des Elektromotors 2 wirkenden Drehmomente, wie das von der Trennkupplung 3 übertragene Moment $M_{TK}$, das Luftspaltdrehmoment $M_{EM}$ des Elektromotors 2 und das beim Antreiben des Drehmomentwandlers 5 rückwirkende Pumpenmoment $M_P$ werden summiert (Block 20) und durch das Trägheitsmoment $J_{EM}$ der Drehmasse des Elektromotors 2 geteilt (Block 21). Daraus ergibt sich eine Winkelbeschleunigung $\dot{\omega}_{EM}$ der Drehmasse des Elektromotors 2, welche im Block 22 integriert wird, woraus sich die Winkelgeschwindigkeit $\omega_{EM}$ des Elektromotors 2 ergibt.

Das Luftspaltdrehmoment $M_{EM}$ ergibt sich beim elektrischen Fahren aus dem Fahrerwunschmoment $M_{Fahrer}$, das aus der Stellung des Fahrpedals (Block 30) ermittelt und/oder von einem Fahrerassistenzsystem bzw. einer Leerlaufregelung vorgegeben wird. Das Luftspaltdrehmoment $M_{EM}$ folgt dem Fahrerwunschmoment $M_{Fahrer}$ entsprechend einem Momentenanregelverhalten des Elektromotors 2 und der Signallaufzeiten verzögert, was durch einen Filterblock 31 und eine Zeitverzögerung 32 verdeutlicht wird.

Das von dem Drehmomentwandler 5 ausgegebene Turbinenmoment $M_T$ wird mit dem sich im Block 23 ergebenen Drehmoment der Drehfeder 8 im Block 24 verrechnet und anschließend durch das Trägheitsmoment $J_T$ der Turbinendrehmasse 6 dividiert (Block 25), woraus sich die Winkelbeschleunigung $\dot{\omega}_T$ der Turbinendrehmasse 6 ergibt.

Eine Integration der Winkelbeschleunigung $\dot{\omega}_T$ führt zur Winkelgeschwindigkeit $\omega_T$ der Turbinendrehmasse 6.

Aus dem Drehmoment der Drehfeder 8 und einem aus dem Fahrwiderstand des Hybridfahrzeuges abgeleiteten Fahrwiderstandsmoment $M_{FZ}$, welche im Block 27 summiert werden, wird die Winkelbeschleunigung $\dot{\omega}_{FZ}$ der Fahrzeugersatzdrehmasse 7 bestimmt, indem das summierte Drehmoment durch das Trägheitsmoment $J_{FZ}$ der Fahrzeugersatzdrehmasse 7 geteilt wird (Block 28). Auch hier wird durch eine Integration der Winkelbeschleunigung $\dot{\omega}_{FZ}$ im Block 29 die Winkelgeschwindigkeit $\omega_{FZ}$ der Fahrzeugersatzdrehmasse gewonnen.

Wie aus Figur 2 zu erkennen ist, ergibt sich eine Auswirkung eines von der Trennkupplung 3 übertragenen Momentes $M_{TK}$ auf die Winkelgeschwindigkeiten und auf das Turbinenmoment $M_T$. Das Turbinenmoment $M_T$ entspricht dem vom Drehmomentwandler 5 an das Automatikgetriebe und somit an die Antriebsräder abgegebenen Moment. Das von der Trennkupplung übertragene Moment $M_{TK}$ ändert sich während des Motorstartes stark und stellt eine Störung für den Fahrerwunsch dar. Es kann Ruckeln bzw. Drehschwingungen des Antriebsstranges anregen.

Um diese Auswirkungen zu unterbinden, wird im Block 33 die Winkelgeschwindigkeit $\omega_{FZ}$ der Fahrzeugersatzdrehmasse 7 mit der tatsächlichen Winkelgeschwindigkeit des Elektromotors 2 im Block 33 verglichen und eine Differenz gebildet.

Die Größen der Fahrzeugersatzdrehmasse 7 können bei einer Bestimmung anhand einer Messung anhand von Raddrehzahlen, der Fahrzeuggeschwindigkeit, differenzierter Raddrehzahlen bzw. der von einem Fahrdynamiksystem gemessenen Fahrzeuglängsbeschleunigung ermittelt werden. Ein Beobachter kann zur Ermittlung eingesetzt werden. Schlupf an den Rädern ist zu berücksichtigen. Die Winkelbeschleunigung $\dot{\omega}_{FZ}$ der Fahrzeugersatzdrehmasse 7 wird im Block 34 gefiltert und ergibt die Winkelbeschleunigung $\dot{\omega}_{FZFlt}$. Diese Filterung ist aufgrund von Signalrauschen beispielsweise eines Beschleunigungssensors oder eines differenzierten Drehzahlsignals erforderlich.

In den Blöcken 35a und 35 b wird ein binäres Signal $B_{Regler}$ für einen bestimmte Zeitspanne t2 bis t3, beispielsweise für 0,3 s eingeschaltet, wodurch die Schalter in den Blöcken 36a und 36b in die in Figur 2 dargestellte Stellung schalten. Die Speicherblöcke 37a und 37b garantieren, dass innerhalb dieses Zeitraumes an den Ausgängen der Schalter 36a und 36b die zum Zeitpunkt t2, also zum Beginn der Zeitspanne vorliegende gefilterte Winkelbeschleunigung $\dot{\omega}_{FZFlt}$ (t2) und die Differenz der Winkelgeschwindigkeiten ($\omega_{FZ}$ (t2) - $\omega_{EM}$ (t2)) anliegen.

Die Winkelbeschleunigung $\dot{\omega}_{FZFlt}$ (t2) stellt einen Sollwert für den Startvorgang dar und wird mit der aktuellen Winkelbeschleunigung $\dot{\omega}_{FZFlt}$(t) im Block 38 verglichen. Die sich daraus ergebenen Unterschiede werden im Block 39 mit einem Verstärkungsfaktor $K_D$ multipliziert und auf das Luftspaltdrehmoment $M_{EM}$ des Elektromotors 2 im Block 40 addiert.

Ebenso wird die zum Zeitpunkt t2 gespeicherte Solldifferenz ($\omega_{FZ}$ (t2) - $\omega_{EM}$ (t2)) mit der aktuellen Differenz ($\omega_{FZ}$ (t) - $\omega_{EM}$ (t)) im Block 41 verglichen, mit einem Verstärkungsfaktor $K_P$ im Block 42 multipliziert und ebenfalls im Block 40 auf das Luftspaltdrehmoments $M_{EM}$ des Elektromotors 2 aufgeschaltet.

Insgesamt gilt für den Zeitraum zwischen t2 und t3 ein Reglermoment von

$$M_{Regler} = K_D \left[\dot{\omega}_{FzFlt} (t2) - \dot{\omega}_{FzFlt} (t)\right] + K_P \left[(\omega_{Fz} (t) - \omega_{EM} (t)) - (\omega_{Fz} (t2) - \omega_{EM} (t2))\right]$$

Außerhalb diese Zeitraumes gilt: $M_{Regler} = 0$

Die Zuschaltung des Reglers für den Zeitraum t2 bis t3 erfolgt mit Hilfe des Schalters 43, welcher die Regelung nur während des Startvorganges des Verbrennungsmotors 1 während des Fahrbetriebes des Hybridfahrzeuges aktiviert.

Durch den Startvorgang werden komfortmindernde Ruckel- bzw. Triebstrangschwingungen angeregt. Dabei schwingen die Fahrzeugersatzdrehmasse 7 und die Drehmasse des Elektromotors 2 meist gegenphasig. Auf Grund der Trägheitsverhältnisse ergeben sich meist geringere Schwingungsamplituden an der Winkelgeschwindigkeit $\omega_{FZ}$ (t) der Fahrzeugersatzdrehmasse und höhere Schwingungsamplituden an der Winkelgeschwindigkeit $\omega_{EM}$ (t) der Drehmasse des Elektromotors 2. Mittels der erläuterten aufgeschalteten Regelung wirken sich die Ruckel- bzw. Triebstrangschwingungen auf das Reglermoment $M_{Regler}$ und damit das Luftspaltdrehmoment $M_{EM}$ des Elektromotors 2 aus, wodurch eine aktive Schwingungsdämpfung erreicht wird.

Die Beendigung des Reglereingriffes erfolgt nach den erläuterten Ausführungen zum Zeitpunkt t3. Der Regler kann aber auch für einen gewissen Zeitraum länger aktiv sein, um Ruckel- bzw. Triebstrangschwingungen weiterhin zu dämpfen, die nach dem Start des Verbrennungsmotors 1 vorliegen können.

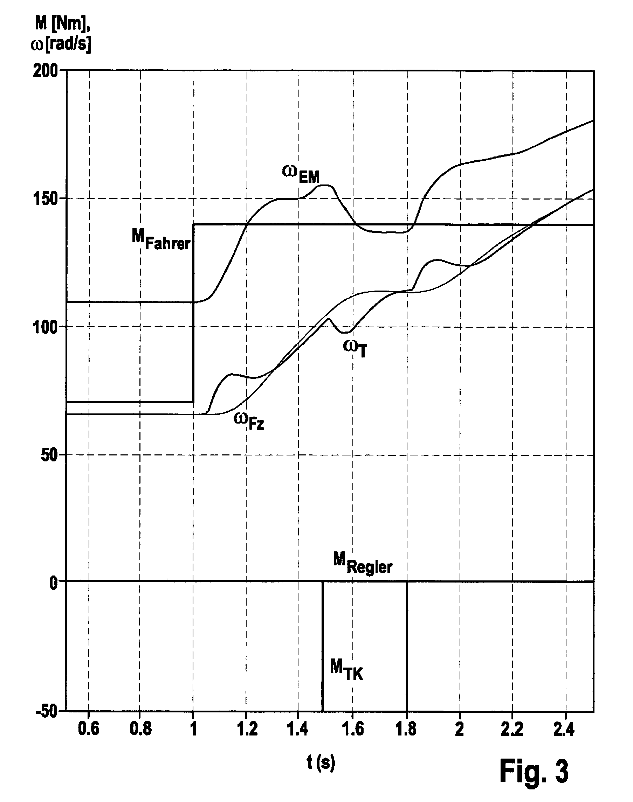

In der Figur 3 sind ein Drehmoment M im Nm bzw. Winkelgeschwindigkeit $\omega$ in rad/s über der Zeit t in Sekunden aufgetragen. Zum Zeitpunkt t1 = 1 Sekunde erfolgt ein Sprung des Fahrerwunschmomentes $M_{Fahrer}$ von 70 Nm auf 140 Nm. Ein binäres Signal $B_{TK}$ (Block 44 in Figur 2) wird im Zeitraum von t2 = 1,5 Sekunden bis t3 = 1,8 Sekunden eingeschaltet, wodurch der Schalter im Block 45 in die in Figur 2 dargestellte Stellung springt und ein negatives Trennkupplungsmoment $M_{TK}$ ausgibt. Es gilt :

$$M_{TK} = 0 \text{ Nm} \quad \text{für } t \le 1{,}5 \text{ s oder } t \ge 1{,}8 \text{ s}$$

$$M_{TK} = -50 \text{ Nm für } 1.5s < t < 1.8s$$

Damit wird der Startvorgang des Verbrennungsmotors 1 vereinfacht nachgebildet.

Weiterhin sind in Figur 3 die Verläufe der Winkelgeschwindigkeiten $\omega_{EM}$, $\omega_T$ und $\omega_{FZ}$ dargestellt. Der Einbruch der Winkelgeschwindigkeit $\omega_{FZ}$ der Fahrzeugersatzdrehmasse infolge des Trennkupplungsmomentes $M_{TK}$ ist deutlich zu erkennen. Da das erfindungsgemäße Reglermoment $M_{Regler}$ in diesem dargestellten Fall nicht eingreift, wird der Fahrkomfort stark beeinträchtigt und das Fahrzeug wird verzögert, obwohl das Fahrerwunschmoment $M_{Fahrer}$ sich nicht ändert.

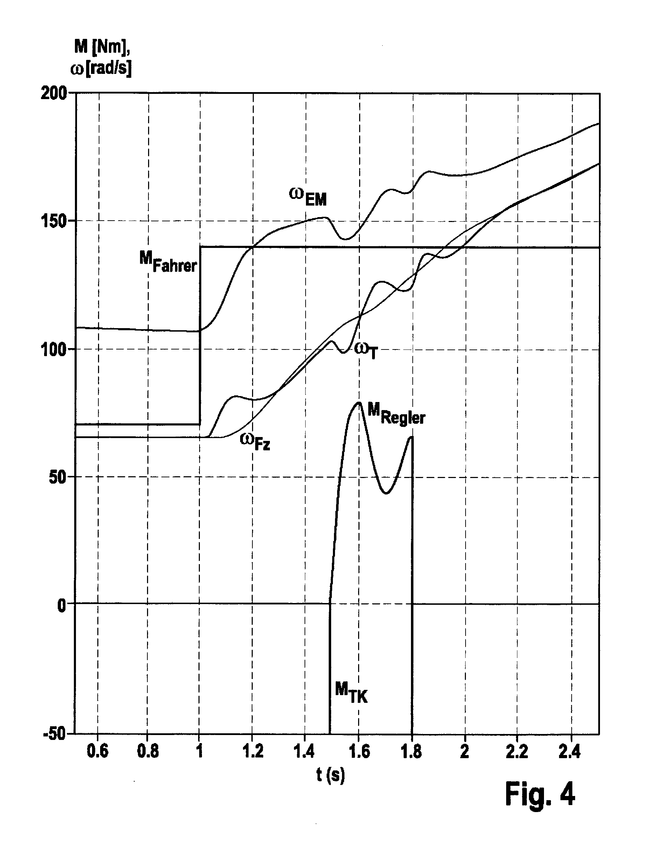

Figur 4 zeigt Ergebnisse, die unter denselben Randbedingungen wie in Figur 3 erzielt wurden, allerdings mit der erfindungsgemäßen Regelung. Der Einbruch der Winkelgeschwindigkeit $\omega_{FZ}$ der Fahrzeugersatzdrehmasse infolge des Trennkupplungsmomentes $M_{TK}$ ist im Vergleich zur Figur 3 sehr gering, was einen hohen Fahrkomfort hervorruft.

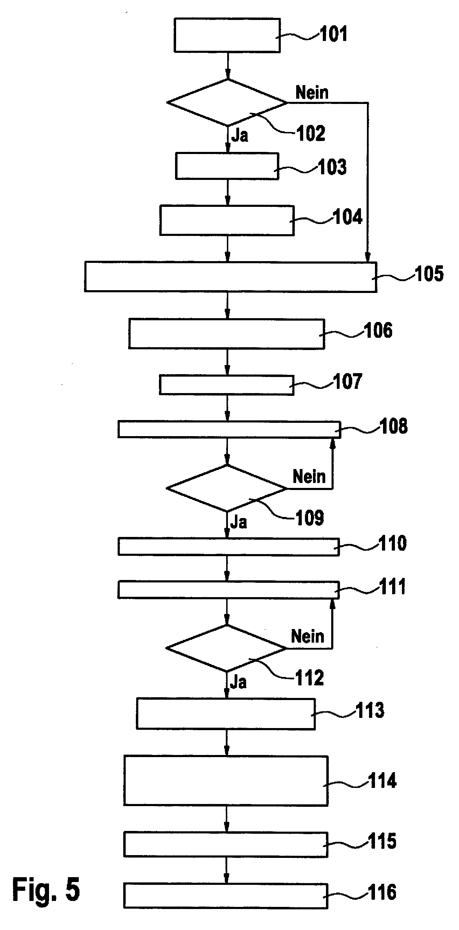

Der zeitliche Ablauf des Verfahrens soll nun anhand von Figur 5 erläutert werden.

Im Block 101 fährt das Hybridfahrzeug rein elektrisch. Das bedeutet, dass die Trennkupplung geöffnet ist und das Moment der Trennkupplung $M_{TK} = 0$ Nm beträgt. Die Regelung ist abgeschaltet ($M_{Regler} = 0$ Nm) und der Verbrennungsmotor 1 steht. Anschließend wird im Block 102 geprüft, ob die Überbrückungskupplung des Drehmomentwandlers 5 geschlossen ist. Ist dies der Fall wird diese im Block 103 geöffnet. Anschließend wird die Differenzwinkelgeschwindigkeit $(\omega_{Fz}(t) - \omega_{EM}(t)) \ne 0$ rad/s über den Drehmomentwandler 5 aufgebaut. Während der Verfahrensschritte im Block 103 und 104 bleibt die Trennkupplung geöffnet und der Regler abgeschaltet.

Es wird zum Block 105 fortgeschritten.

Zu diesem Block 105 wird direkt aus dem Block 102 gegangen, wenn festgestellt wurde, dass die Überbrückungskupplung des Drehmomentwandlers 5 bereits geöffnet ist.

Im Block 105 werden die aus der Fahrzeuglängsbewegung zu Zeitpunkt t = t2 ermittelte gefilterte Winkelbeschleunigung $\dot{\omega}_{FzFlt}(t2)$ und Differenzwinkelgeschwindigkeit $(\omega_{Fz}(t2) - \omega_{EM}(t2))$ gespeichert. Gleichzeitig wird zum Zeitpunkt t = t2 die Regelung eingeschaltet (Block 106), mittels welcher die aus der Fahrzeuglängsbewegung ermittelten Größen auf das Luftspaltdrehmoment $M_{EM}$ des Elektromotors 2 zurückgeführt werden. Es gilt:

$$M_{Regler} = K_D\,[\dot{\omega}_{FzFlt}(t2) - \dot{\omega}_{FzFlt}(t)] + K_P\,[(\omega_{Fz}(t) - \omega_{EM}(t)) - (\omega_{Fz}(t2) - \omega_{EM}(t2))]$$

Im Block 107 beginnt das Schließen der Trennkupplung zum Zeitpunkt t = t2, wobei das Drehmoment der Trennkupplung $M_{TK}$ kleiner als 0 Nm wird.

Da sich die Trennkupplung 3 zunächst in einem schlupfenden Zustand befindet, erfolgt das Anschleppen und Beschleunigen des Verbrennungsmotors 1 (Block 108). Anschließend wird im Block 109 gemessen, ob die Winkelgeschwindigkeit des Verbrennungsmotors 1 eine Schwelle für die Zündung bzw. Einspritzung überschreitet. Ist dies nicht der Fall wird zum Block 108 zurückgekehrt und der Verbrennungsmotor 1 weiter beschleunigt.

Hat die Winkelgeschwindigkeit des Verbrennungsmotors die Schwelle für die Einspritzung bzw. Zündung überschritten, beginnt im Block 110 die Zündung bzw. Einspritzung des Verbrennungsmotors 1. In diesem Zustand können Drehzahlüberschwinger am Verbrennungsmotor 1 auftreten. Im Block 111 werden die Winkelgeschwindigkeiten des Verbrennungsmotors 1 und des Elektromotors 2 angeglichen, wobei sich die Trennkupplung 3 immer noch in einem schlupfenden Zustand befindet.

Im Block 112 wird festgestellt, ob die Winkelgeschwindigkeit des Verbrennungsmotors 1 gleich der Winkelgeschwindigkeit des Elektromotors 2 ist. Ist dies nicht der Fall, wird in den Block 111 zurückgekehrt und die Winkelgeschwindigkeiten werden weiter angeglichen. Sind die Winkelgeschwindigkeiten von Verbrennungsmotor 1 und Elektromotor 2 gleich, wird die Trennkupplung im Block 113 vollständig geschlossen. Dies geschieht zum Zeitpunkt t = t3. Als optimaler Zustand wird hier betrachet, dass der Verbrennungsmotor 1 zum Zeitpunkt t = t3 ein geringes Drehmoment in den Antriebsstrang einspeist, wobei das von der Trennkupplung 3 übertragene Moment $M_{TK}$ nahe 0 Nm ist.

Im Block 114 wird zum Zeitpunkt t = t3 die Regelung abgeschaltet und das Drehmoment des Reglers $M_{Regler}$ = 0 Nm. Alternativ kann die Regelung noch länger eingeschaltet bleiben, um Schwingungen im Antriebsstrang aktiv zu dämpfen. Als Abschaltkriterium kann dabei einmal eine abgelaufene Zeitdauer betrachtet werden oder dass erkannte Schwingungen abgeklungen sind.

Anschließend wird im Block 115 das Fahrerwunschmoment $M_{Fahrer}$ auf den Verbrennungsmotor 1 umgelagert, da nun die Trennkupplung 3 geschlossen ist. Im Block 116 erfolgt ein hybridisches Fahren, wobei der Elektromotor 2 und der Verbrennungsmotor 1 das Fahrerwunschmoment $M_{Fahrer}$ gemeinsam erzeugen.

Die erfindungsgemäße Regelung kann auch bei einem Stopp des Verbrennungsmotors 1 sinnvoll eingesetzt werden. Dies ist möglich, wenn sich der Verbrennungsmotor 1 in der Schubabschaltung befindet und durch Öffnen der Trennkupplung 3 abgestellt wird, was mit einer schnellen Änderung des von der Trennkupplung übertragenen Momentes $M_{TK}$ verbunden ist.

In der vereinfachten Prinzipdarstellung nach Figur 1 sind Trägheiten, Elastizitäten und Dämpfungen entsprechend den Übersetzungsverhältnissen auf die Getriebeeingangswelle umgerechnet. Bei Änderungen des Übersetzungsverhältnisses , z. B. infolge einer Getriebeschaltung, ändern sich diese umgerechneten Größen. Eine Anpassung der Regelung und/oder der Regler-Verstärkungsfaktoren ist vorteilhaft. Auch die die Fahrzeuglängsbewegung beschreibenden Größen wie Raddrehzahlen, Raddrehbeschleunigungen und/oder die Fahrzeuglängsbeschleunigung sind den Übersetzungsverhältnissen entsprechend auf die Winkelgeschwindigkeit $\omega_{FZ}$ bzw. die gefilterte Winkelbeschleunigung $\dot{\omega}_{FzFlt}$ der Fahrzeugersatzdrehmasse 7 umgerechnet. Sich ändernde Übersetzungsverhältnisse sowie Schlupf an den Rädern müssen bei den Umrechnungen berücksichtigt werden.

Das Verhalten des Trennkupplungsmomentes $M_{TK}$ ist in den Figuren 3 und 4 vereinfacht dargestellt. Zum Anschleppen und Beschleunigen des Verbrennungsmotors 1 ergibt sich zunächst ein negatives Trennkupplungsmoment $M_{TK} < 0$ und damit ein positives Reglermoment $M_{Regler} > 0$ Nm. Bei korrekt einsetzenden Verbrennungen kann der Verbrennungsmotor 1 ein positives Drehmoment erzeugen, welches nach erfolgtem Anschleppen und Beschleunigen zu einem positiven Trennkupplungsmoment $M_{TK} > 0$ führt. Bei weiterhin aktiver Regelung im Block 114 wird ein entsprechendes positives Trennkupplungsmoment $M_{TK} > 0$ Nm durch ein negatives Reglermoment $M_{Regler} < 0$ Nm ausgeglichen. Das Reglermoment $M_{Regler}$ führt einen Vorzeichenwechsel durch. Aus dem zeitlichen Verlauf des Reglermomentes $M_{Regler}$ und/oder aus dem zeitlichen Verlauf der Sollwerte und der Istwerte können damit ein korrekter Start des Verbrennungsmotors 1 und korrekte Verbrennungen erkannt werden. Dies gilt insbesondere dann, wenn eine Differenz zwischen Sollwert und Istwert eine vorgegebene Schwelle über- oder unterschreitet.

Auch bei Hybridantrieben, die keinen Drehmomentwandler 5 aufweisen, ist ein Einsatz der erfindungsgemäßen Lösung möglich.

**Patentansprüche**

1. Verfahren zum Betreiben eines Hybridfahrzeuges, bei welchem während des Fahrzustandes des Hybridfahrzeuges ein erstes, sich im Ruhezustand befindendes Antriebsaggregat (1) gestartet wird, indem ein Drehmoment ($M_{EM}$) von einem zweiten, sich in Betrieb befindlichen Antriebsaggregates (2) zum Teil auf das erste Antriebsaggregat (1) übertragen wird, wobei das Drehmoment ($M_{EM}$) des zweiten, sich in Betrieb befindlichen Antriebsaggregates (2) durch mindestens eine aus der Fahrzeuglängsbewegung des Hybridfahrzeuges abgeleitete Größe ($\omega_{FZ}$; $\omega_{FZ}$-$\omega_{EM}$; $\dot{\omega}_{FZ}$) beeinflusst wird, **dadurch gekennzeichnet, dass** mindestens eine der aus der Fahrzeuglängsbewegung des Hybridfahrzeuges abgeleiteten Größen ($\omega_{FZ}$; $\omega_{FZ}$-$\omega_{EM}$; $\omega_{FZ}$) einen Sollwert darstellt, welcher mit einem Istwert verglichen wird, der von dem zweiten Antriebsaggregat und/oder aus der Bewegung des Hybridfahrzeuges bereitgestellt wird, wobei in Abhängigkeit von dem Vergleich das Drehmoment ($M_{EM}$) des zweiten Antriebsaggregates (2) geregelt wird, wobei die aus der Fahrzeuglängsbewegung des Hybridfahrzeuges abgeleitete Größe ($\omega_{FZ}$; $\omega_{FZ}$-$\omega_{EM}$; $\dot{\omega}_{FZ}$) durch Messung der Raddrehzahlen, der Raddrehbeschleunigungen, der Fahrzeuglängsgeschwindigkeit und/oder der Fahrzeuglängsbeschleunigung bestimmt wird.

2. Verfahren zum Betreiben eines Hybridfahrzeuges, bei welchem während des Fahrzustandes des Hybridfahrzeuges ein erstes Antriebsaggregat (1) gestoppt wird, indem eine Übertragung eines Drehmomentes ($M_{VM}$) von dem ersten Antriebsaggregat (1) auf ein zweites Antriebsaggregat (2) unterbrochen wird, wobei das Drehmoment ($M_{EM}$) des zweiten Antriebsaggregates (2) durch mindestens eine aus der Fahrzeuglängsbewegung des Hybridfahrzeuges abgeleiteten Größe ($\omega_{FZ}$; $\omega_{FZ}$-$\omega_{EM}$; $\dot{\omega}_{FZ}$) beeinflusst wird, und wobei mindestens eine der aus der Fahrzeuglängsbewegung des Hybridfahrzeuges abgeleiteten Größen ($\omega_{FZ}$; $\omega_{FZ}$-$\omega_{EM}$; $\omega_{FZ}$) einen Sollwert darstellt, welcher mit einem Istwert verglichen wird, der von dem zweiten Antriebsaggregat und/oder aus der Bewegung des Hybridfahrzeuges bereitgestellt wird, wobei in Abhängigkeit von dem Vergleich das Drehmoment ($M_{EM}$) des zweiten Antriebsaggregates (2) geregelt wird, wobei die aus der Fahrzeuglängsbewegung des Hybridfahrzeuges abgeleitete Größe ($\omega_{FZ}$; $\omega_{FZ}$-$\omega_{EM}$; $\dot{\omega}_{FZ}$) durch Messung der Raddrehzahlen, der Raddrehbeschleunigungen, der Fahrzeuglängsgeschwindigkeit und/oder der Fahrzeuglängsbeschleunigung bestimmt wird.

3. Verfahren nach Anspruch 1 oder 2, **dadurch gekennzeichnet, dass** die aus der Fahrzeuglängsbewegung abgeleitete Größe hochpassgefiltert ist und das Drehmoment des zweiten Antriebsaggregates beeinflusst.

**4.** Verfahren nach Anspruch 1, **dadurch gekennzeichnet, dass** die aus der Fahrzeuglängsbewegung des Hybridfahrzeuges abgeleitete Größe eine Geschwindigkeit ($\omega_{FZ}$) der Fahrzeugersatzdrehmasse (7), eine Differenzgeschwindigkeit einer Fahrzeugersatzdrehmasse (7) und einer Masse des zweiten Antriebsaggregates ($\omega_{FZ} - \omega_{EM}$) und/oder eine Winkelbeschleunigung ($\dot{\omega}_{FZ}$) der Fahrzeugersatzdrehmasse (7) darstellt.

**5.** Verfahren nach Anspruch 4, **dadurch gekennzeichnet, dass** die Beschleunigung ($\dot{\omega}_{FZ}$) der Fahrzeugersatzdreh-masse gefiltert wird.

**6.** Verfahren nach Anspruch 4 oder 5, **dadurch gekennzeichnet, dass** die aus der Fahrzeuglängsbewegung abge-leitete Größe ($\omega_{FZ}$; $\omega_{FZ}$-$\omega_{EM}$; $\dot{\omega}_{FZ}$) zu einem Zeitpunkt (t2) ermittelt wird, in welchem der Schließvorgang einer Trennkupplung (3) beginnt oder kurz vor dem Beginn steht.

**7.** Verfahren nach Anspruch 1 und 6, **dadurch gekennzeichnet, dass** der Vergleich des Sollwertes, der aus der Fahrzeuglängsbewegung des Hybridfahrzeuges abgeleitet wurde, mit dem aus der Fahrzeugbewegung abgeleiteten Istwert für einen vorgegebenen Zeitraum (t2-t3) erfolgt.

**8.** Verfahren nach Anspruch 7, **dadurch gekennzeichnet, dass** der aus der Fahrzeuglängsbewegung des Hybridfahrzeuges abgeleitete Sollwert für den vorgegebenen Zeitraum (t2-t3) unverändert bleibt.

**9.** Verfahren nach Anspruch 7 oder 8, **dadurch gekennzeichnet, dass** der vorgegebene Zeitraum (t2-t3) die Spanne ab dem Beginn des Schließvorganges bis zum vollständigen Schließen der Trennkupplung (3) umfasst.

**10.** Verfahren nach einem der vorhergehenden Ansprüche, **dadurch gekennzeichnet, dass** der Sollwert anhand eines Modells ermittelt wird.

**11.** Verfahren nach Anspruch 1 und 7, **dadurch gekennzeichnet, dass** der Startvorgang des ersten Antriebsaggregates (1) am zeitlichen Verlauf einer Differenz zwischen Sollwert und Istwert erkannt wird.

**Claims**

**1.** Method for operating a hybrid vehicle, in which during the driving state of the hybrid vehicle a first drive unit (1) which is in the state of rest is started in that a torque ($M_{EM}$) is partially transmitted from a second, operating drive unit (2) to the first drive unit (1), wherein the torque ($M_{EM}$) of the second drive unit (2) which is operating is influenced by at least one variable ($\omega_{FZ}$; $\omega_{FZ}$-$\omega_{EM}$; $\dot{\omega}_{FZ}$) which is derived from the longitudinal movement of the hybrid vehicle, **characterized in that** at least one of the variables ($\omega_{FZ}$; $\omega_{FZ}$-$\omega_{EM}$; $\omega_{FZ}$) which is derived from the longitudinal movement of the hybrid vehicle represents a setpoint value which is compared with an actual value which is made available by the second drive unit and/or from the movement of the hybrid vehicle, wherein the torque ($M_{EM}$) of the second drive unit (2) is regulated as a function of the comparison, wherein the variable ($\omega_{FZ}$; $\omega_{FZ}$-$\omega_{EM}$; $\dot{\omega}_{FZ}$) which is derived from the longitudinal movement of the hybrid vehicle is determined by measuring the wheel speeds, the rotational accelerations of the wheels, the longitudinal speed of the vehicle and/or the longitudinal acceleration of the vehicle.

**2.** Method for operating a hybrid vehicle, in which during the driving state of the hybrid vehicle, a first drive unit (1) is stopped in that a transmission of a torque ($M_{VM}$) from the first drive unit (1) to a second drive unit (2) is interrupted, wherein the torque ($M_{EM}$) of the second drive unit (2) is influenced by at least one variable ($\omega_{FZ}$; $\omega_{FZ}$-$\omega_{EM}$; $\dot{\omega}_{FZ}$) which is derived from the longitudinal movement of the hybrid vehicle, and wherein at least one of the variables ($\omega_{FZ}$; $\omega_{FZ}$-$\omega_{EM}$; $\omega_{FZ}$) which are derived from the longitudinal movement of the hybrid vehicle represents a setpoint value which is compared with an actual value which is made available by the second drive unit and/or from the movement of the hybrid vehicle, wherein the torque ($M_{EM}$) of the second drive unit (2) is regulated as a function of the comparison, wherein the variable ($\omega_{FZ}$; $\omega_{FZ}$-$\omega_{EM}$; $\dot{\omega}_{FZ}$) which is derived from the longitudinal movement of the hybrid vehicle is determined by measuring the wheel speeds, the rotational accelerations of the wheels, the longitudinal speed of the vehicle and/or the longitudinal acceleration of the vehicle.

**3.** Method according to Claim 1 or 2, **characterized in that** the variable which is derived from the longitudinal movement of the vehicle is high-pass filtered and influences the torque of the second drive unit.

**4.** Method according to Claim 1, **characterized in that** the variable which is derived from the longitudinal movement of the hybrid vehicle represents a speed ($\omega_{FZ}$) of the equivalent rotational mass (7) of the vehicle, a differential speed of an equivalent rotational mass (7) of the vehicle and a mass of the second drive unit ($\omega_{FZ} - \omega_{EM}$) and/or an angular acceleration ($\acute{\omega}_{FZ}$) of the equivalent rotational mass (7) of the vehicle.

5. Method according to Claim 4, **characterized in that** the acceleration ($\acute{\omega}_{FZ}$) of the equivalent rotational mass of the vehicle is filtered.

6. Method according to Claim 4 or 5, **characterized in that** the variable ($\omega_{FZ}$; $\omega_{FZ}-\omega_{EM}$; $\acute{\omega}_{FZ}$) which is derived from the longitudinal movement of the vehicle is determined at a time (t2) at which the closing process of a clutch (3) starts or just before the start.

7. Method according to Claims 1 and 6, **characterized in that** the setpoint value which was derived from the longitudinal movement of the hybrid vehicle is compared with the actual value for a predefined time period (t2-t3) derived from the movement of the vehicle.

8. Method according to Claim 7, **characterized in that** the setpoint value which is derived from the longitudinal movement of the hybrid vehicle remains unchanged for the predefined time period (t2-t3).

9. Method according to Claims 7 or 8, **characterized in that** the predefined time period (t2-t3) comprises the period from the start of the closing process up to the complete closure of the clutch (3).

10. Method according to one of the preceding claims, **characterized in that** the setpoint value is determined by means of a model.

11. Method according to Claims 1 and 7, **characterized in that** the starting process of the first drive unit (1) is detected on the time profile of a difference between the setpoint value and the actual value.

**Revendications**

1. Procédé de conduite d'un véhicule hybride dans lequel, lorsque le véhicule hybride est en situation de roulage, un premier ensemble d'entraînement (1) situé à l'état de repos est démarré en transférant sur le premier ensemble d'entraînement (1) une partie du couple de rotation ($M_{EM}$) délivré par un deuxième ensemble d'entraînement (2) en fonctionnement, le couple de rotation ($M_{EM}$) du deuxième ensemble d'entraînement (2) en fonctionnement étant influencé par au moins une grandeur ($\omega_{FZ}$; $\omega_{FZ}-\omega_{EM}$; $\acute{\omega}_{FZ}$) dérivée du déplacement longitudinal du véhicule hybride, **caractérisé en ce que**
au moins une des grandeurs ($\omega_{FZ}$; $\omega_{FZ}-\omega_{EM}$; $\omega_{FZ}$) dérivées du déplacement longitudinal du véhicule hybride constitue une valeur de consigne qui est comparée à une valeur effective fournie par le deuxième ensemble d'entraînement et/ou par le déplacement du véhicule hybride,
**en ce que** le couple de rotation ($M_{EM}$) du deuxième ensemble d'entraînement (2) est régulé en fonction de la comparaison et
**en ce que** la grandeur ($\omega_{FZ}$; $\omega_{FZ}-\omega_{EM}$; $\acute{\omega}_{FZ}$) dérivée du déplacement longitudinal du véhicule hybride est déterminée par mesure de la vitesse de rotation des roues, de l'accélération de la rotation des roues, de la vitesse longitudinale du véhicule et/ou de l'accélération longitudinale du véhicule.

2. Procédé de conduite d'un véhicule hybride dans lequel, lorsque le véhicule hybride est en situation de roulage, un premier ensemble d'entraînement (1) est arrêté en interrompant la transmission d'un couple de rotation ($M_{VM}$) du premier ensemble d'entraînement (1) à un deuxième ensemble d'entraînement (2), en ce que le couple de rotation ($M_{EM}$) du deuxième ensemble d'entraînement (2) est influencé par au moins une grandeur ($\omega_{FZ}$; $\omega_{FZ}-\acute{\omega}_{EM}$; $\omega_{FZ}$) dérivée du déplacement longitudinal du véhicule hybride, au moins une des grandeurs ($\omega_{FZ}$; $\omega_{FZ}-\omega_{EM}$; $\omega_{FZ}$) dérivées du déplacement longitudinal du véhicule hybride constituant une valeur de consigne qui est comparée à une valeur effective fournie par le deuxième ensemble d'entraînement et/ou par le déplacement du véhicule hybride, le couple de rotation ($M_{EM}$) du deuxième ensemble d'entraînement (2) étant régulé en fonction de la comparaison et la grandeur ($\omega_{FZ}$; $\omega_{FZ}-\omega_{EM}$; $\acute{\omega}_{FZ}$) dérivée du déplacement longitudinal du véhicule hybride étant déterminée par mesure de la vitesse de rotation des roues, de l'accélération de la rotation des roues, de la vitesse longitudinale du véhicule et/ou de l'accélération longitudinale du véhicule.

3. Procédé selon les revendications 1 ou 2, **caractérisé en ce que** la grandeur dérivée du déplacement longitudinal du véhicule subit un filtrage passe-haut et agit sur le couple de rotation du deuxième ensemble d'entraînement.

4. Procédé selon la revendication 1, **caractérisé en ce que** la grandeur dérivée du déplacement longitudinal du véhicule hybride représente la vitesse ($\omega_{FZ}$) de la masse rotative équivalente (7) du véhicule, de la vitesse différentielle de la masse rotative équivalente (7) du véhicule et de la masse du deuxième ensemble d'entraînement ($\omega_{FZ}$-$\omega_{EM}$) et/ou de l'accélération angulaire ($\dot{\omega}_{FZ}$) de la masse rotative équivalente (7) du véhicule.

5. Procédé selon la revendication 4, **caractérisé en ce que** l'accélération ($\omega'_{FZ}$) de la masse rotative équivalente du véhicule est filtrée.

6. Procédé selon les revendications 4 ou 5, **caractérisé en ce que** la grandeur ($\omega_{FZ}$; $\omega_{FZ}$-$\omega_{EM}$; $\dot{\omega}_{FZ}$) dérivée du déplacement longitudinal du véhicule est déterminée à l'instant (t2) auquel l'opération de fermeture d'un embrayage de séparation (3) commence ou situé peu avant ce début.

7. Procédé selon les revendications 1 et 6, **caractérisé en ce que** la comparaison de la valeur de consigne qui a été dérivée du déplacement longitudinal du véhicule hybride à la valeur effective dérivée du déplacement du véhicule s'effectue pendant un intervalle de temps (t2-t3) prédéterminé.

8. Procédé selon la revendication 7, **caractérisé en ce que** la valeur de consigne dérivée du déplacement longitudinal du véhicule hybride reste inchangée pendant l'intervalle de temps (t2-t3) prédéterminé.

9. Procédé selon les revendications 7 ou 8, **caractérisé en ce que** l'intervalle de temps (t2-t3) prédéterminé s'étend entre le début de l'opération de fermeture jusqu'à la fermeture complète de l'embrayage de séparation (3).

10. Procédé selon l'une des revendications précédentes, **caractérisé en ce que** la valeur de consigne est déterminée à l'aide d'un modèle.

11. Procédé selon les revendications 1 et 7, **caractérisé en ce que** l'opération de démarrage du premier ensemble d'entraînement (1) est détectée sur l'évolution dans le temps de la différence entre la valeur de consigne et la valeur effective.

Fig. 1

Fig. 2

Fig. 3

**Fig. 4**

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006047655 A1
- EP 0922600 A2